# EUROPEAN PATENT SPECIFICATION

(11) **EP 4 027 226 B1**
(45) Date of publication and mention of the grant of the patent: **10.09.2025**
(21) Application number: 20871567.2
(22) Date of filing: 28.07.2020
(51) Int. Cl.: G06F 3/0481, G06F 1/16, G06F 3/04886, G06F 3/0482

(54) **DISPLAY METHOD AND ELECTRONIC EQUIPMENT**
ANZEIGEVERFAHREN UND ELEKTRONISCHE VORRICHTUNG
PROCÉDÉ D'AFFICHAGE ET ÉQUIPEMENT ÉLECTRONIQUE

(30) Priority: 30.09.2019 CN 201910944111
(43) Date of publication of application: 13.07.2022
(73) Proprietor: Huawei Technologies Co., Ltd., Shenzhen, Guangdong 518129 (CN)
(72) Inventor: HUANG, Dezhi, Shenzhen, Guangdong 518129 (CN); TIAN, Huajian, Shenzhen, Guangdong 518129 (CN); ZHANG, Jing, Shenzhen, Guangdong 518129 (CN)
(74) Representative: Pfenning, Meinig & Partner mbB
(86) International application number: PCT/CN2020/105275
(87) International publication number: WO 2021/063097

(56) References cited:
- CN-A- 108 234 295
- CN-A- 108 459 815
- CN-A- 108 459 817
- CN-A- 108 459 817
- CN-A- 108 509 237
- CN-A- 110 874 168
- KR-A- 20170 044 687
- US-A1- 2013 322 850
- US-A1- 2015 116 593
- US-A1- 2015 338 988
- US-A1- 2015 339 804
- US-A1- 2019 250 786
- US-B1- 9 043 714

## Description

### TECHNICAL FIELD

This solution relates to the field of terminal technologies, and in particular, to a display method and an electronic device.

### BACKGROUND

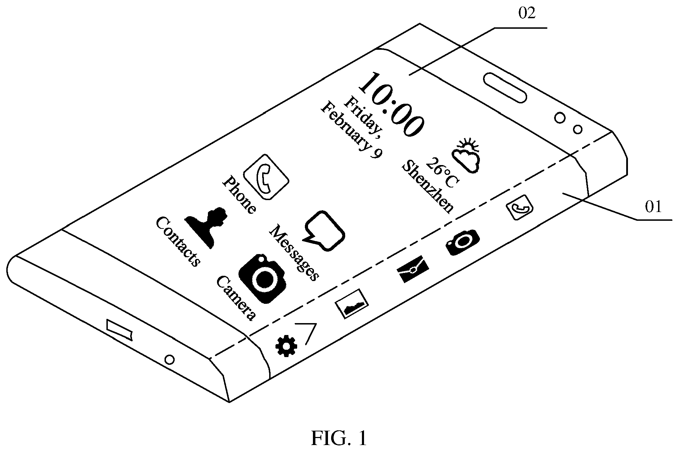

With continuous development of technologies of flexible displays and curved displays, a design of large-size screens greatly improves user experience. How to fully utilize large-size screens to provide better user experience has become an important research direction currently. For an edge display area (for example, a side screen) of a bezel-less display, only icons of some applications are currently deployed in the edge display area, so that a user can quickly open these applications. As shown in FIG. 1, icons of applications such as Phone, Camera, and Email are deployed in an edge display area 01, and a user may quickly open an application corresponding to an icon by performing a tap operation. Even if an interface displayed on a front screen 02 changes, content displayed in the edge display area 01 remains unchanged. It can be learned that such a display manner in the edge display area is too fixed, and information that is related to the interface displayed on the front screen cannot be displayed. This fails to fully utilize the edge display area.

US 2015/338988 A1 discloses a mobile terminal that is capable of performing various operations using an extended side display area and a method for controlling the same.

### SUMMARY

This application provides a display method according to claim 1, an electronic device according to claim 5, a computer-readable storage medium according to claim 9 and a program product according to claim 10, to fully utilize an edge display area on a screen, so as to improve user experience.

According to a first aspect, an embodiment of this application provides a display method, and the method is applicable to an electronic device. A display of the electronic device includes a main display area and an edge display area. The method includes: The electronic device determines that the display is in a landscape mode; and the electronic device controls the main display area and the edge display area of the display to display a display interface of a first application, where at least one function control is displayed in the edge display area and the at least one function control is related to the first application.

In the embodiments of this application, the electronic device can fully utilize the edge display area on a screen. This simplifies operation steps, and improves user experience. Because the electronic device is in a landscape mode, accidental touch by a user can be avoided.

Before that the electronic device controls the main display area and the edge display area of the display to display a display interface of a first application, the method further includes: obtaining a layout template of the edge display area, where the layout template includes a display style, a layout parameter, and a control response manner; and adjusting a layout of the at least one function control in the edge display area based on the layout template.

In a possible design, when the electronic device determines that no touch operation performed by a user on the at least one function control is received within specified duration, the electronic device hides display of the at least one function control. In the embodiments of this application, function controls are hidden to provide immersive experience for the user.

In a possible design, location information of the main display area and the edge display area on the display is preconfigured in the electronic device. Alternatively, location information of the main display area and the edge display area on the display is set in the electronic device by the user.

In the embodiments of this application, the user may adjust a size of the edge display area. In this way, an application can be adaptively adapted to a size of an icon of a function control based on the size, so as to avoid operation inconvenience of the user that occurs when the icon is too small.

In a possible design, when the display of the electronic device is a foldable display and the display is in a folded state, the main display area is a lighted first screen and/or a lighted second screen, and the edge display area is a bendable area, where the foldable display can be folded to form at least two screens, and the at least two screens include the first screen and the second screen. When the display of the electronic device is a curved display, the main display area is a non-curved part on a front side of the display, and the edge display area is a curved part on an edge of the display. When the display of the electronic device is a bezel-less display, the main display area is a front part of the display, and the edge display area is a side part of the display.

In the embodiments of this application, the method may be applicable to a foldable display, a curved display, and a bezel-less display, and is widely applied.

According to a second aspect, an embodiment of this application further provides an electronic device. The electronic device includes: a display; one or more processors; a memory; and one or more programs. The one or more programs are stored in the memory, the one or more programs include instructions, and when the instructions are executed by the electronic device, the electronic device is enabled to perform any one of the method steps according to the first aspect.

According to a third aspect, an embodiment of this application further provides an electronic device. The electronic device may include modules/units for performing the method according to any one of the first aspect or the possible designs of the first aspect. These modules/units may be implemented by hardware, or may be implemented by hardware executing corresponding software.

According to a fourth aspect, an embodiment of this application further provides a computer-readable storage medium. The computer-readable storage medium includes program instructions, and when the program instructions are run on an electronic device, the electronic device is enabled to perform the method according to any one of the possible designs of the first aspect.

According to a fifth aspect, an embodiment of this application further provides a program product, and when the program product runs on an electronic device, the electronic device is enabled to perform the method according to any one of the possible designs of the first aspect.

According to a sixth aspect, an embodiment of this application further provides a graphical user interface on an electronic device. The electronic device includes a display, a memory, and one or more processors, where the one or more processors are configured to execute one or more computer programs stored in the memory. The graphical user interface may include a graphical user interface displayed when the electronic device performs the method according to any one of the first aspect or the possible designs of the first aspect.

### BRIEF DESCRIPTION OF DRAWINGS

FIG. 1 is a schematic diagram of a side display interface in the conventional technology;
FIG. 2 is a schematic diagram of a structure of a mobile phone according to an embodiment of this application;
FIG. 3A and FIG. 3B are a schematic diagram of a structure of an Android operating system according to an embodiment of this application;
FIG. 4A(a) to FIG. 4B(b) are a schematic diagram of a structure of a mobile phone according to an embodiment of this application;
FIG. 5A is a schematic flowchart of a display method according to an embodiment of this application;
FIG. 5B(a) to FIG. 5B(d) are a schematic diagram of a landscape mode and a portrait mode of an electronic device according to an embodiment of this application;
FIG. 6A(a) and FIG. 6A(b) to FIG. 6D are schematic diagrams of a group of interfaces according to an embodiment of this application;
FIG. 7(a) and FIG. 7(b) to FIG. 9(a) to FIG. 9(d) each are a schematic diagram of an example of a setting interface in a display area according to an embodiment of this application; and
FIG. 10 is a schematic diagram of a structure of another electronic device according to an embodiment of this application.

### DESCRIPTION OF EMBODIMENTS

To make objectives, technical solutions, and advantages of embodiments of this application clearer, the following describes the technical solutions in the embodiments of this application in detail with reference to accompanying drawings of the specification and specific implementations.

In the conventional technology, an electronic device controls a main display area to display a user interface of an application, and controls an edge display area to display no icon of an application or display icons of only some applications. Such a display manner in the edge display area is too fixed to fully utilize the edge display area. Therefore, an embodiment of this application provides a display method. In the method, after receiving a landscape operation of a user, an electronic device controls, when the electronic device is in a landscape mode, a main display area and an edge display area of a display to display a display interface of a first application. At least one function control related to the first application is further displayed in the edge display area of the display. For example, if the first application is a browser application, the at least one function control related to the first application may be a search bar; or if the first application is a video play application, the at least one function control related to the first application may be a brightness adjustment control, a volume adjustment control, or the like. In the method, immersive experience can be provided for the user and the edge display area on the display can be fully utilized, to improve user experience.

Technical solutions in the embodiments of this application are described in detail below with reference to the accompanying drawings in the following embodiments of this application.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include forms like "one or more", unless otherwise specified in the context clearly. It should be further understood that, in the embodiments of this application, "one or more" refers to one, two, or more, and the term "and/or" describes an association between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment, but mean "one or more but not all of the embodiments", unless otherwise specifically emphasized. Terms "include", "contain", "have", and their variants all mean "include but are not limited to", unless otherwise specifically emphasized.

Some terms in the embodiments of this application are first explained and described below, to facilitate better understanding of a person skilled in the art.

In the embodiments of this application, "at least one" means one or more, and "more" thereof means two or more. In addition, it should be understood that, in descriptions of this application, terms such as "first" and "second" are merely used for the purpose of distinguishing the descriptions, cannot be understood as an indication or implication of relative importance, and cannot be understood as an indication or implication of a sequence.

An application (application, app) program in the embodiments of this application may be referred to as an application for short, and is a software program that can implement one or more specific functions. Generally, a plurality of applications may be installed on an electronic device, for example, an instant messaging application, a video application, an audio application, and an image shooting application. The instant messaging application may include, for example, Messages, WeChat (WeChat), WhatsApp Messenger, Line (Line), Instagram (instagram), Kakao Talk, and DingTalk. The image shooting application may include, for example, a camera application (a system camera or a third-party camera application). The video application may include, for example, YouTube, Twitter, TikTok, iQIYI, and Tencent Video. The audio application may include, for example, KuGou, EMUMO, and QQ Music. An application mentioned in the following embodiments may be a system application installed before delivery of the electronic device, or may be a third-party application downloaded from a network or obtained from another electronic device by a user in a process of using the electronic device.

The display method provided in the embodiments of this application may be applicable to any electronic device with a side screen, and a display area corresponding to the side screen is an edge display area. In the display method provided in the embodiments of this application, the side screen of the electronic device may be used as a touch area. In other words, a user may perform a touch operation by using the side screen, to control the electronic device. In some embodiments, the electronic device with the side screen may be an electronic device with a curved display. For another example, the electronic device with the side screen may alternatively be an electronic device configured with a foldable display, for example, a foldable mobile phone. The foldable mobile phone is used as an example. When the foldable mobile phone is in a folded state, a bent display area on the foldable display may be used as the side screen. It should be noted that the display method provided in the embodiments of this application may be applicable to any electronic device with a side screen. Examples are not listed one by one in the embodiments of this application.

The electronic device in the embodiments of this application may also be referred to as a terminal, a terminal device, user equipment (user equipment, UE), or the like. For example, the electronic device in the embodiments of this application may be a portable electronic device, for example, a device that can be installed with an app, such as a mobile phone, a tablet computer, a wearable device (for example, a watch, a band, or a smart helmet), an in-vehicle device, a smart home device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). An example embodiment of a portable electronic device includes but is not limited to a portable electronic device provided with iOS^{®}, Android^{®}, Microsoft^{®}, or another operating system.

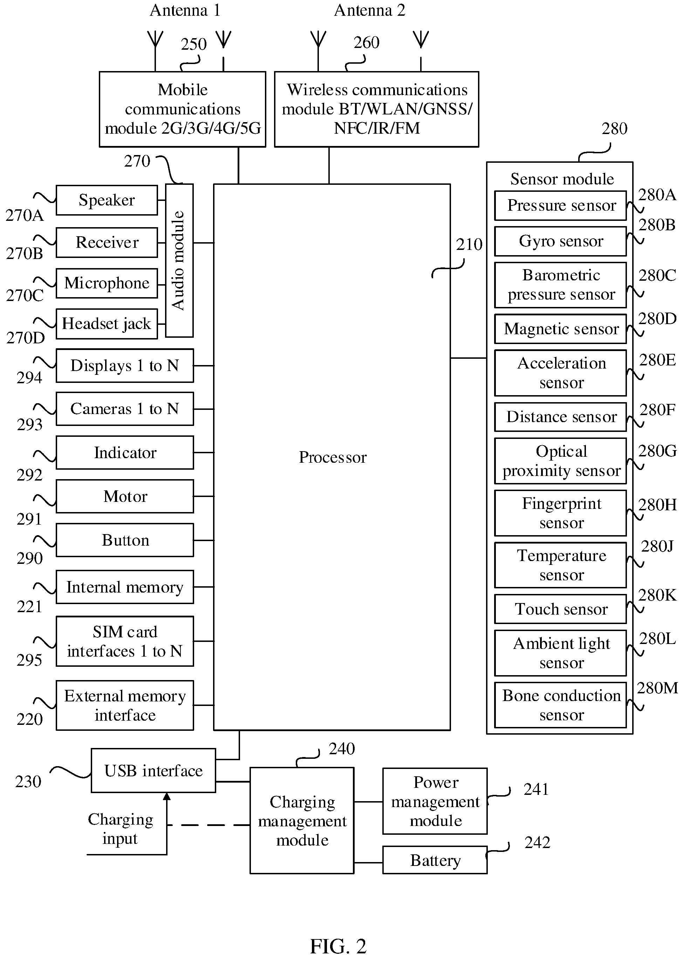

For example, FIG. 2 is a schematic diagram of a structure of an electronic device.

As shown in FIG. 2, the electronic device may include a processor 210, an external memory interface 220, an internal memory 221, a universal serial bus (universal serial bus, USB) interface 230, a charging management module 240, a power management module 241, a battery 242, an antenna 1, an antenna 2, a mobile communications module 250, a wireless communications module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the electronic device. The controller may generate an operation control signal based on an instruction operation code and a time sequence signal, to complete control of instruction fetching and instruction execution. A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces a waiting time of the processor 210, so that system efficiency is improved.

The USB interface 230 is an interface that conforms to a USB standard specification, and may be specifically a mini USB interface, a micro USB interface, a USB Type-C interface, or the like. The USB interface 230 may be configured to connect to a charger to charge the electronic device, or may be configured to transmit data between the electronic device and a peripheral device. The charging management module 240 is configured to receive charging input from the charger. The power management module 241 is configured to connect the battery 242, the charging management module 240, and the processor 210. The power management module 241 receives input from the battery 242 and/or the charging management module 240, and supplies power to the processor 210, the internal memory 221, an external memory, the display 294, the camera 293, the wireless communications module 260, and the like.

A wireless communication function of the electronic device may be implemented through the antenna 1, the antenna 2, the mobile communications module 250, the wireless communications module 260, the modem processor, the baseband processor, and the like. The antenna 1 and the antenna 2 are configured to transmit and receive electromagnetic wave signals. Each antenna of the electronic device may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communications module 250 may provide a solution applied to the electronic device for wireless communication including 2G/3G/4G/5G and the like. The mobile communications module 250 may include at least one filter, a switch, a power amplifier, a low noise amplifier (low noise amplifier, LNA), and the like. The mobile communications module 250 may receive an electromagnetic wave through the antenna 1, perform processing such as filtering and amplification on the received electromagnetic wave, and transmit a processed electromagnetic wave to the modem processor for demodulation. The mobile communications module 250 may further amplify a signal modulated by the modem processor, and convert the signal into an electromagnetic wave for radiation through the antenna 1. In some embodiments, at least some function modules of the mobile communications module 250 may be disposed in the processor 210. In some embodiments, at least some function modules of the mobile communications module 250 and at least some modules of the processor 210 may be disposed in a same device.

The wireless communications module 260 may provide a wireless communication solution that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device. The wireless communications module 260 may be one or more components integrating at least one communications processing module. The wireless communications module 260 receives an electromagnetic wave through the antenna 2, performs frequency modulation and filtering processing on an electromagnetic wave signal, and sends a processed signal to the processor 210. The wireless communications module 260 may further receive a to-be-sent signal from the processor 210, perform frequency modulation and amplification on the signal, and convert the signal into an electromagnetic wave for radiation through the antenna 2.

In some embodiments, the antenna 1 and the mobile communications module 250 of the electronic device are coupled, and the antenna 2 and the wireless communications module 260 of the electronic device are coupled, so that the electronic device can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The display 294 is configured to display a display interface of an application and the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini LED, a micro LED, a micro OLED, a quantum dot light-emitting diode (quantum dot light-emitting diodes, QLED), or the like. In some embodiments, the electronic device may include one or N displays 294, where N is a positive integer greater than 1.

The camera 293 is configured to capture a static image or a video. In some embodiments, the camera 293 may include at least one camera, for example, one front-facing camera and one rear-facing camera.

The internal memory 221 may be configured to store computer-executable program code, and the executable program code includes instructions. The processor 210 performs various function applications of the electronic device and data processing by running the instructions stored in the internal memory 221. The internal memory 221 may include a program storage area and a data storage area. The program storage area may store an operating system, software code of at least one application (for example, iQIYI or WeChat), and the like. The data storage area may store data (for example, an image and a video) and the like generated in a process of using the electronic device. In addition, the internal memory 221 may include a high-speed random access memory, or may include a nonvolatile memory, for example, at least one magnetic disk storage device, a flash memory, or a universal flash storage (universal flash storage, UFS).

The external memory interface 220 may be configured to connect to an external storage card such as a micro SD card, to extend a storage capability of the electronic device. The external storage card communicates with the processor 210 through the external memory interface 220, to implement a data storage function. For example, a file such as an image or a video is stored in the external storage card.

The electronic device may implement audio functions such as music playback or recording by using the audio module 270, the speaker 270A, the receiver 270B, the microphone 270C, the headset jack 270D, the application processor, and the like.

The sensor module 280 may include a pressure sensor 280A, a gyro sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

The pressure sensor 280A is configured to sense a pressure signal, and can convert the pressure signal into an electrical signal. In some embodiments, the pressure sensor 280A may be disposed on the display 294. The gyro sensor 280B may be configured to determine a motion posture of the electronic device. In some embodiments, angular velocities of the electronic device around three axes (namely, axes x, y, and z) may be determined by using the gyro sensor 280B.

The gyro sensor 280B may be configured to perform image stabilization during photographing. The barometric pressure sensor 280C is configured to measure barometric pressure. In some embodiments, the electronic device calculates an altitude based on a barometric pressure value measured by the barometric pressure sensor 280C, to assist in positioning and navigation. The magnetic sensor 280D includes a Hall effect sensor. The electronic device may detect opening and closing of a flip cover by using the magnetic sensor 280D. In some embodiments, when the electronic device is a flip phone, the electronic device can detect opening and closing of a flip cover by using the magnetic sensor 280D. Further, a feature such as automatic unlocking upon opening of the flip cover is set based on a detected opening or closing state of the flip cover. The acceleration sensor 280E may detect magnitude of acceleration of the electronic device in various directions (usually on three axes). When the electronic device is static, a value and a direction of gravity may be detected. The acceleration sensor 280E may further be configured to recognize a posture of the electronic device, and is applied in an application such as a pedometer or switching between a landscape mode and a portrait mode.

The distance sensor 280F is configured to measure a distance. The electronic device may measure the distance in an infrared manner or a laser manner. In some embodiments, in a photographing scenario, the electronic device may measure a distance by using the distance sensor 280F, to implement quick focusing. The optical proximity sensor 280G may include, for example, a light-emitting diode (LED) and an optical detector such as a photodiode. The light-emitting diode may be an infrared light-emitting diode. The electronic device may emit infrared light by using the light-emitting diode. The electronic device detects reflected infrared light from a nearby object by using the photodiode. When sufficient reflected light is detected, it may be determined that there is an object near the electronic device. When insufficient reflected light is detected, the electronic device may determine that there is no object near the electronic device. The electronic device may detect, by using the optical proximity sensor 280G, that a user holds the electronic device close to an ear for a call, to automatically turn off a screen to save power. The optical proximity sensor 280G may also be used in a flip cover mode or a pocket mode to automatically unlock or lock the screen.

The ambient light sensor 280L is configured to sense ambient light brightness. The electronic device may adaptively adjust brightness of the display 294 based on the sensed ambient light brightness. The ambient light sensor 280L may further be configured to automatically adjust white balance during photographing. The ambient light sensor 280L may further cooperate with the optical proximity sensor 280G to detect whether the electronic device is in a pocket, to prevent an accidental touch. The fingerprint sensor 280H is configured to collect a fingerprint. The electronic device may use a feature of the collected fingerprint to implement fingerprint-based unlocking, application lock access, fingerprint-based photographing, fingerprint-based call answering, and the like.

The temperature sensor 280J is configured to detect a temperature. In some embodiments, the electronic device executes a temperature processing policy based on the temperature detected by the temperature sensor 280J. For example, when the temperature reported by the temperature sensor 280J exceeds a threshold, the electronic device lowers performance of a processor near the temperature sensor 280J, to reduce power consumption and implement thermal protection. In some other embodiments, when the temperature is less than another threshold, the electronic device heats the battery 242, to avoid an abnormal shutdown of the electronic device due to a low temperature. In some other embodiments, when the temperature is less than still another threshold, the electronic device boosts an output voltage of the battery 242, to avoid an abnormal shutdown due to a low temperature.

The touch sensor 280K is also referred to as a "touch panel". The touch sensor 280K may be disposed on the display 294, and the touch sensor 280K and the display 294 form a touchscreen, which is also referred to as a "touch screen". The touch sensor 280K is configured to detect a touch operation performed on or near the touch sensor 280K. The touch sensor may transfer the detected touch operation to the application processor, to determine a type of a touch event. A visual output related to the touch operation may be provided on the display 294. In some other embodiments, the touch sensor 280K may alternatively be disposed on a surface of the electronic device, and is located in a position different from that of the display 294.

The bone conduction sensor 280M may obtain a vibration signal. In some embodiments, the bone conduction sensor 280M may obtain a vibration signal of a vibration bone of a human vocal part. The bone conduction sensor 280M may also be in contact with a human pulse to receive a blood pressure beating signal.

The button 290 includes a power button, a volume button, and the like. The button 290 may be a mechanical button, or may be a touch button. The electronic device may receive button input, and generate button signal input related to user settings and function control of the electronic device. The motor 291 may generate a vibration prompt. The motor 291 may be configured to provide an incoming call vibration prompt or a touch vibration feedback. For example, touch operations performed on different applications (for example, photographing and audio playback) may correspond to different vibration feedback effects. The indicator 292 may be an indicator light, and may be configured to indicate a charging status and a power change, or may be configured to indicate a message, a missed call, a notification, and the like. The SIM card interface 295 is configured to connect to a SIM card. The SIM card may be inserted into the SIM card interface 295 or plugged from the SIM card interface 295, to implement contact with or separation from the electronic device.

It may be understood that the components shown in FIG. 2 do not constitute a specific limitation on a mobile phone. The mobile phone may further include more or fewer components than those shown in the figure, or combine some components, or split some components, or have different component arrangements. In the following embodiments, the electronic device shown in FIG. 2 is used as an example for description.

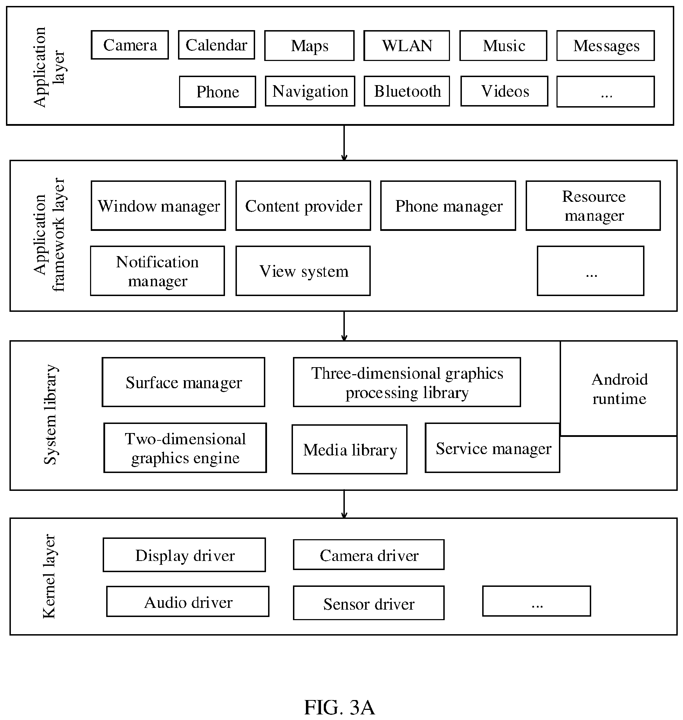

FIG. 3A is a block diagram of a software structure of an electronic device according to an embodiment of this application.

In a layered architecture, software is divided into several layers, and each layer has a clear role and task. The layers communicate with each other through a software interface. In some embodiments, an Android system is divided into four layers from top to bottom: an application layer, an application framework layer, an Android runtime (Android runtime) and system library, and a kernel layer.

The application layer may include a series of application packages.

As shown in FIG. 3A, the application packages may include applications such as Camera, Gallery, Calendar, Phone, Maps, Navigation, WLAN, Bluetooth, Music, Videos, Messages, and beauty camera.

The application framework layer provides an application programming interface (application programming interface, API) and a programming framework for an application at the application layer. The application framework layer includes some predefined functions.

As shown in FIG. 3A, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and received, a browsing history and bookmarks, an address book, and the like.

The view system includes visual controls such as a control for displaying a text and a control for displaying an image. The view system may be configured to construct an application. A display interface may include one or more views. For example, a display interface including a Messages notification icon may include a text display view and an image display view.

The phone manager is configured to provide a communication function of the electronic device, for example, call status management (including call connection and disconnection, and the like).

The resource manager provides an application with various resources such as a localized character string, an icon, an image, a layout file, and a video file.

The notification manager enables an application to display notification information in a status bar, and may be configured to convey a notification-type message. The notification manager may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application running on the background, or may be a notification that appears on the screen in a form of a dialog window. For example, text information is displayed in the status bar, an alert sound is played, the electronic device vibrates, or an indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run in the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

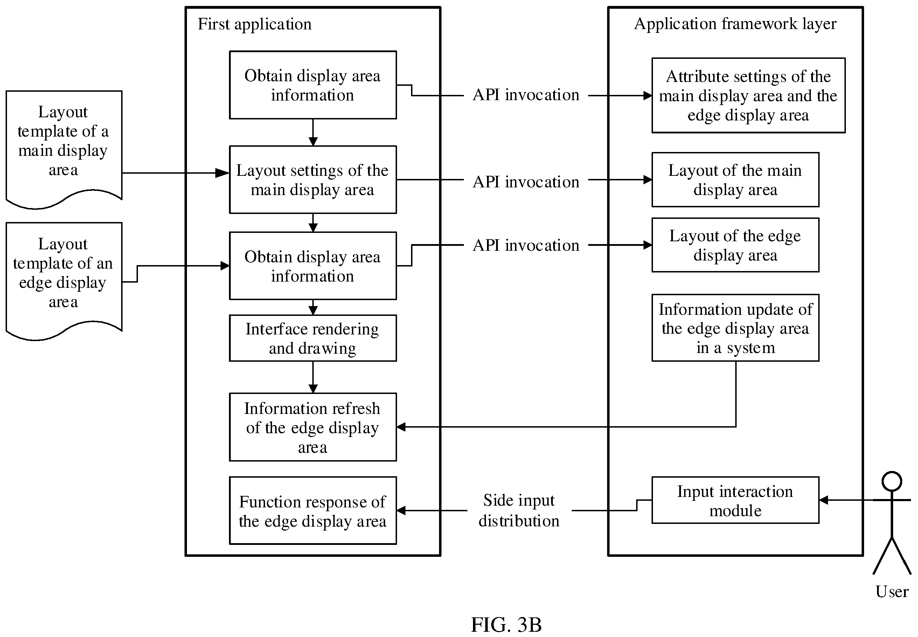

As shown in FIG. 3B, when being started, a first application may obtain, through an application programming interface (application programming interface, API), a display capability that is of an edge display area and that is provided by a system, and obtain attribute information such as locations and sizes of the edge display area and a main display area. In addition, the first application may further obtain a layout template of the main display area and a layout template of the edge display area through the API, and adjust a layout of at least one function control in the edge display area based on the layout template of the edge display area.

After completing a layout of an interface, the first application may render and display the interface. When a display of an electronic device receives an input operation performed by a user on the edge display area, an input interaction module at an application framework layer distributes the input operation to the first application through the API, and the first application performs response processing for the input operation.

It should be noted that the system may provide a software development kit (software development kit, SDK) for a third-party application. The SDK may provide the third-party application with the display capability of the edge display area (a size of the edge display area, whether display is supported, and the like) and a display layout template of each display area, and may further support interfaces such as display drawing, side touch event distribution, and addition of an element such as a dynamic window (control). The SDK can be directly exposed to the third-party application at the application layer, so that a developer of the third-party application can develop and integrate software.

The following describes examples of working procedures of software and hardware of the electronic device with reference to a display method in the embodiments of this application.

In an example, a sensor at a hardware layer may collect sensor data. For example, a gyro sensor at the hardware layer may detect whether a display is in a landscape mode, and a touch sensor at the hardware layer may detect a touch operation performed by the user in an edge display area. When the display is in a landscape mode, and the touch sensor receives an open operation performed by the user on the first application, a corresponding hardware interrupt is sent to a kernel layer. The kernel layer processes a photographing operation into an original input event (including information such as touch coordinates and a timestamp of the touch operation). The original input event is stored at the kernel layer. An application framework layer obtains the original input event from the kernel layer. A window manager invokes an interface to lay out an interface, and then performs rendering display. Finally, a display interface of the first application is displayed in a main display area and the edge display area of the display, and at least one function control related to the first application is displayed in the edge display area of the display.

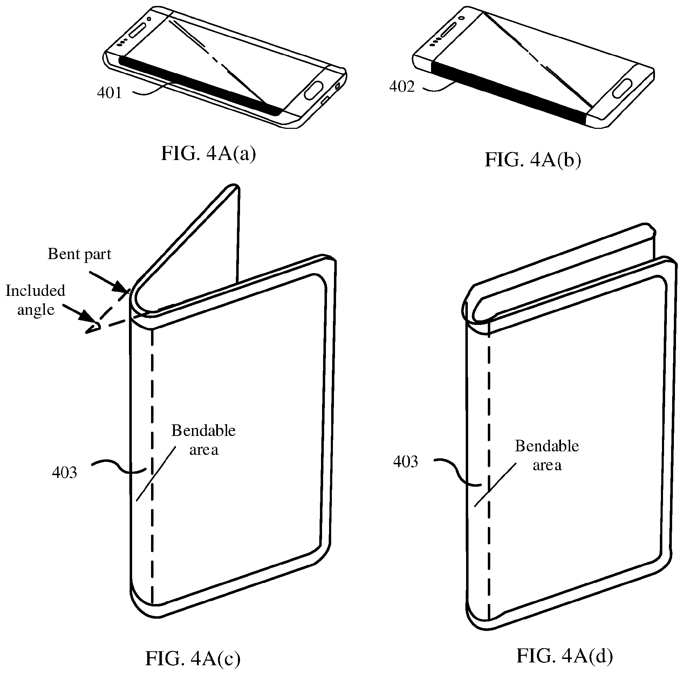

FIG. 4A(a) to FIG. 4A(d) are a schematic diagram of a structure of an electronic device to which the display method is applicable according to an embodiment of this application. FIG. 4A(a) shows a curved display, and an edge 401 of the curved display has a specific curvature. FIG. 4A(b) shows a bezel-less display and a side 40 of the bezel-less display is not bent. FIG. 4A(c) and FIG. 4A(d) show a foldable display. FIG. 4A(c) shows that the foldable display is in a half-folded state, and FIG. 4A(d) shows that the foldable display is in a fully folded state. When the foldable display is in a half-folded state or a fully folded state, a bendable area 403 is an edge display area of the foldable display.

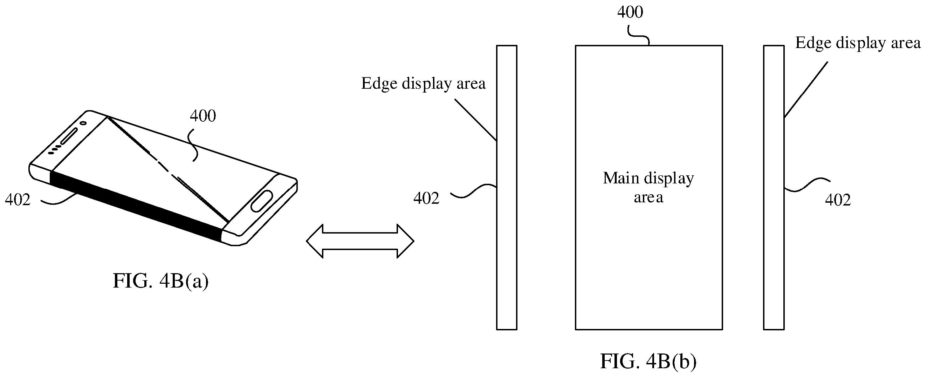

In the embodiments of this application, a display of an electronic device includes a main display area and an edge display area. For example, as shown in FIG. 4B(a) and FIG. 4B(b), a main display area 400 and an edge display area 402 are different display areas on a same display, and the main display area 400 is larger than the edge display area 402.

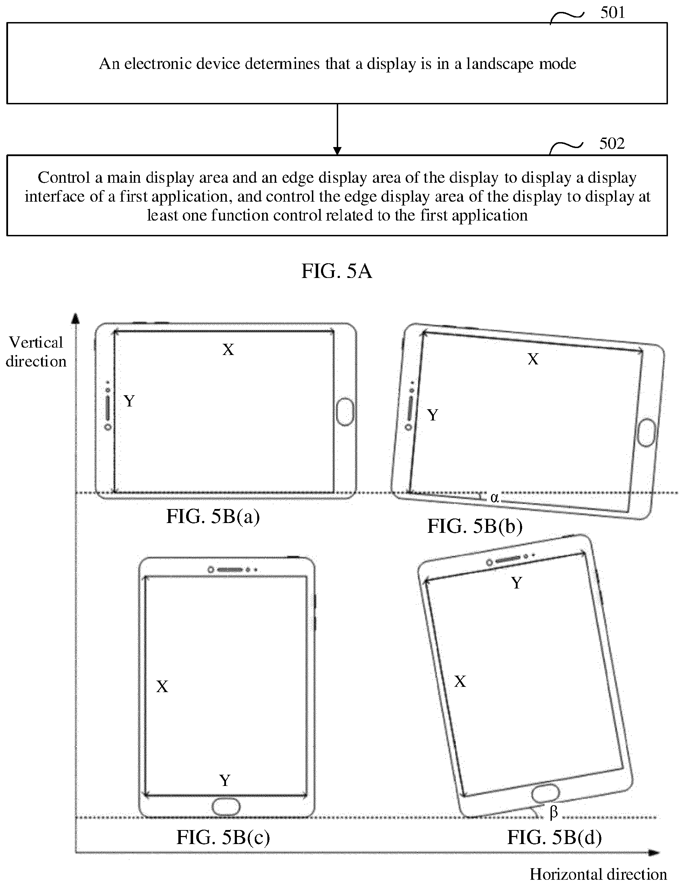

An embodiment of this application provides a display method. As shown in FIG. 5A, the method may be applied to the electronic devices shown in FIG. 2, FIG. 4A(a) to FIG. 4A(d), and FIG. 4B(a) and FIG. 4B(b), and specifically includes the following steps.

Step 501: An electronic device determines that a display is in a landscape mode.

Specifically, when a user uses the electronic device, the electronic device may be in a landscape mode or in a portrait mode. In the landscape mode, the display of the electronic device is basically in a shape of a horizontal bar. In the portrait mode, the display of the electronic device is basically in a shape of a vertical bar. Specifically, in the landscape mode and the portrait mode, aspect ratios of the display of the electronic device are different. The aspect ratio of the display may also be referred to as a height-width ratio of the display, and is a ratio of a height to a width of the display. In the landscape mode, a height of the display is a length of a short side of the display, and a width of the display is a length of a long side of the display. In the portrait mode, a height of the display is a length of a long side of the display, and a width of the display is a length of a short side of the display. The long sides of the display are two longer sides that are parallel and equal to each other in the four sides of the display, and the short sides of the display are two shorter sides that are parallel and equal to each other in the four sides of the display.

For example, when the electronic device is in a landscape mode shown in FIG. 5B(a), a height of the display is Y, and a width of the display is X. In this case, an aspect ratio of the display is Y/X, where Y/X < 1. It should be noted that, when the electronic device is tilted or rotated by a relatively small angle in the landscape mode shown in FIG. 5B(a) (for example, the angle is not greater than a first preset threshold, for example, 20°, 15°, or 5°), the electronic device is still considered to be in the landscape mode. For example, in the landscape mode shown in FIG. 5B(a), the electronic device rotates clockwise by an angle α, so that the electronic device is in a mode shown in FIG. 5B(b). When α is not greater than the first preset threshold, the electronic device considers the mode shown in FIG. 5B(b) as the landscape mode. For another example, when the electronic device is in a portrait mode shown in FIG. 5B(c), a height of the display is X, and a width of the display is Y. In this case, an aspect ratio of the display is X/Y, where X/Y > 1. It should further be noted that, when the electronic device is tilted or rotated by a relatively small angle in the portrait mode shown in FIG. 5B(c) (for example, the angle is not greater than a second preset threshold, for example, 20°, 15°, or 5°), the electronic device is still considered to be in the portrait mode. For example, in the portrait mode shown in FIG. 5B(c), the electronic device rotates counterclockwise by an angle β, so that the electronic device is in a mode shown in FIG. 5B(d). When β is not greater than the second preset threshold, the electronic device considers the mode shown in FIG. 5B(d) as the portrait mode. It may be understood that the first preset threshold and the second preset threshold may be the same or different, and may be set according to an actual requirement. This is not limited.

Step 502: Control a main display area and an edge display area of the display to display a display interface of a first application, and control the edge display area of the display to display at least one function control related to the first application.

For example, if the first application is a browser application, when the display is in the landscape mode, a display interface of the browser application is displayed in a full screen manner in the main display area and the edge display area, and a search box control is displayed in the edge display area. If the first application is a video play application, when the display is in the landscape mode, a display interface of the video play application is displayed in a full screen manner in the main display area and the edge display area, and a function control such as a brightness adjustment control or a volume adjustment control is displayed in the edge display area. In addition, cast and crew information, behind-the-scenes information, content introduction information, comment information, or the like of a video being played may further be displayed. If the first application is a game application, when the display is in the landscape mode, a display interface of the game application is displayed in a full screen manner in the main display area and the edge display area, and a virtual mall icon, a skill icon, or a virtual backpack icon is displayed in the edge display area. In addition, background information, strategy information, competition information, or the like of a game may further be displayed.

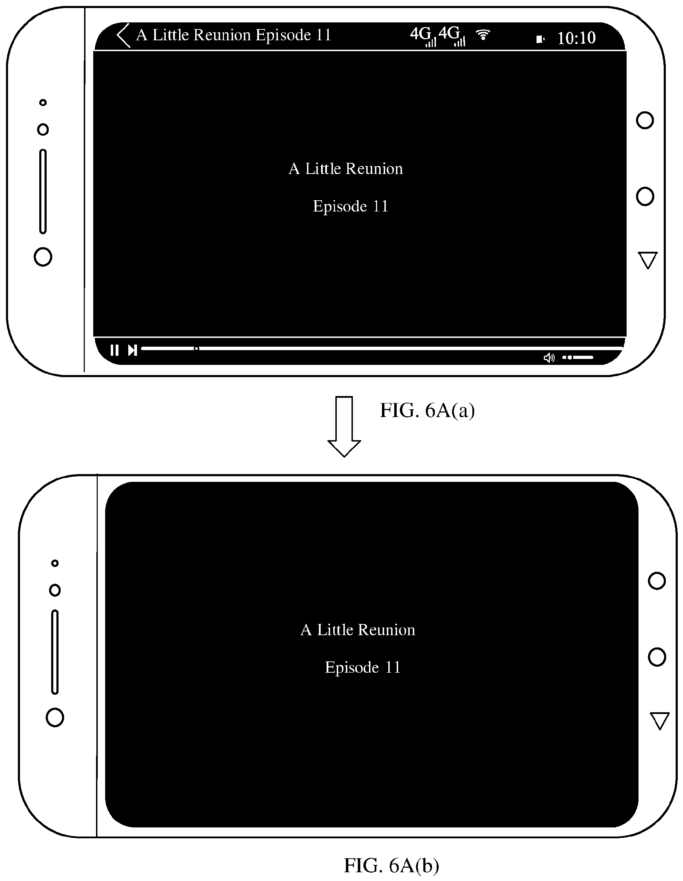

For example, an interface 610 shown in FIG. 6A(a) is displayed in a main display area and an edge display area of a mobile phone display. Video content introduction information and status icons such as a signal strength icon and a battery power icon are displayed in a top-side edge display area. A pause control, a next episode control, a progress bar control, and a volume control are displayed in a bottom-side edge display area. It should be noted that, in a possible embodiment, when displaying the display interface of the video application in the main display area, the electronic device may simultaneously display function controls such as a progress bar control and a volume control in the edge display area. In another possible embodiment, when receiving an operation performed by the user on the edge display area, the electronic device may control the edge display area to display function controls such as a progress bar control and a volume control, where the operation may be a sliding gesture, a tap operation, or the like. An occasion for triggering display of the function control in the edge display area is not specifically limited in the embodiments of this application.

In addition, when the display is in the landscape mode, and a display interface of the electronic device is a system home screen of an operating system, the system home screen is displayed in a full screen manner in the main display area and the edge display area of the display, and status icons in a status bar, for example, a signal icon, a battery power icon, a screenshot icon, a screen recording icon, a flashlight icon, a Bluetooth icon, a mute icon, and a lock-screen icon are displayed in the edge display area.

In the embodiments of this application, because the display interface of the first application is displayed in a full screen manner in the main display area and the edge display area, the edge display area of the display may also be fully utilized, and content displayed in the edge display area may change with the application interface. Therefore, a display manner of the edge display area is more flexible and personalized. In addition, in the conventional technology, when the display is in the landscape mode, a function control displayed on an edge is usually hidden due to a screen size limitation, and is triggered to be displayed only after the user taps the screen. However, in the embodiments of this application, the function control may be displayed in the edge display area all the time, to simplify an operation of the user, so as to improve user experience.

In a possible embodiment, before controlling the main display area and the edge display area of the display to display the display interface of the first application, the electronic device may first obtain a layout template of the edge display area, and then the electronic device adjusts, based on the layout template, a layout of the at least one function control in the display interface of the first application in the edge display area. The layout template may be preconfigured in the electronic device, and includes a display style, a layout parameter, and a control response manner. The display style includes a location, a size, an arrangement, and the like of a to-be-displayed object. The to-be-displayed object may be an image resource, a function control, or the like.

In a possible embodiment, when the electronic device determines that no touch operation performed by the user on the edge display area is received within specified duration, the electronic device hides display of the at least one function control. For example, when the mobile phone does not detect, within 1 minute, a touch operation performed by the user on the edge display area, the mobile phone displays an interface shown in FIG. 6A(b). To be specific, a play interface of the video application is displayed in both the main display area and the edge display area, and the function control in the edge display area is hidden.

The following describes the display method provided in the embodiments of this application by using examples with reference to the following application scenarios.

### Scenario 1

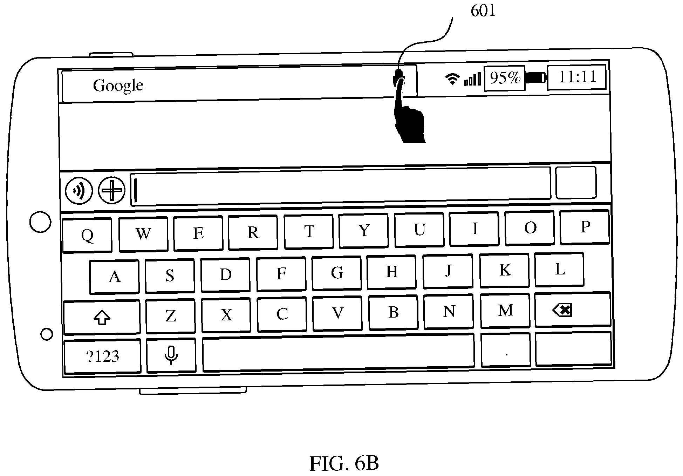

As shown in FIG. 6B, if the first application is a browser application, when the display is in the landscape mode, a display interface of the browser application is displayed in a full screen manner in the main display area and the edge display area, and a search box control is displayed in the edge display area. The search box control is used to provide a search function for the user.

Specifically, in a possible embodiment, when detecting a tap operation performed by the user on a microphone control 601, the electronic device performs a speech input function, and text information corresponding to a user speech is automatically entered into the search box control.

### Scenario 2

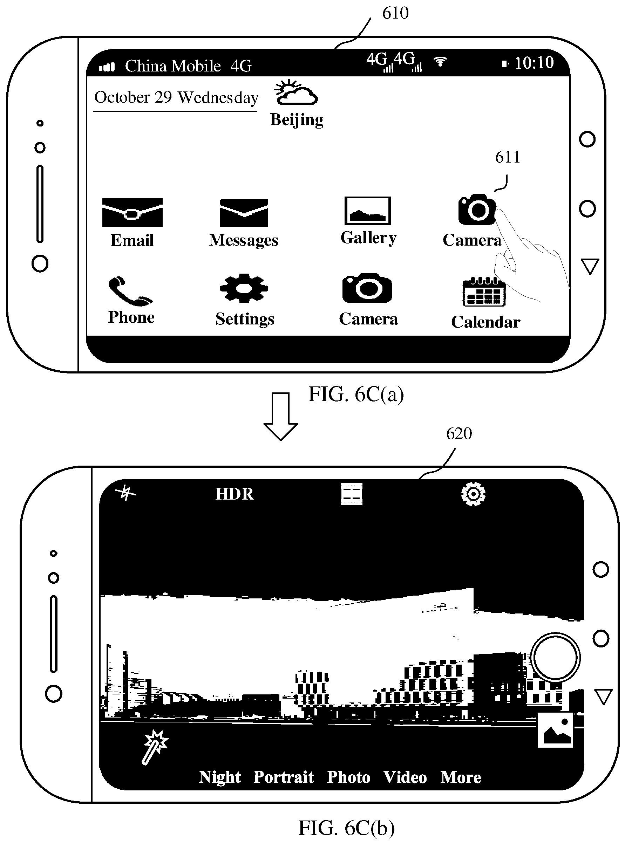

In the landscape mode, when the electronic device detects a tap operation performed by the user on a camera icon 611 in an interface 610 shown in FIG. 6C(a), the electronic device displays an interface 620 shown in FIG. 6C(b). In the interface 620, a shooting preview interface of a camera application is displayed in a full screen manner in the main display area and the edge display area, and function controls such as a shooting setting icon, a filter selection icon, a night mode, and a portrait mode are displayed in the edge display area.

### Scenario 3

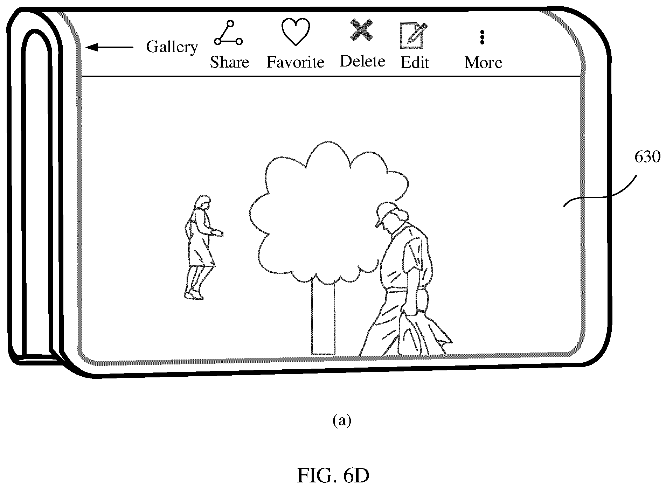

As shown in FIG. 6D, when the display of the electronic device is a foldable display, if the first application is Gallery, when the display is in the landscape mode, a display interface of Gallery is displayed in a full screen manner in the main display area and the edge display area, and function controls such as a sharing control and a deletion control are displayed in the edge display area, that is, a bendable area.

In a possible embodiment, location information of the main display area and the edge display area on the display may be preconfigured in the electronic device by a developer. For example, when the display of the electronic device is the foldable display shown in FIG. 4A(c) and FIG. 4A(d), a location, a length, and a width corresponding to a bendable area of the electronic device are a default location, a default length, and a default width of the edge display area. When the display of the electronic device is the curved display shown in FIG. 4A(a), a location, a length, and a width corresponding to an edge (a part with a curvature) of the curved display are a default location, a default length, and a default width of the edge display area. When a system application or a third-party application is started, the default location, the default length, and the default width of the edge display area of the electronic device may be obtained through an external display interface, and then a layout may be adjusted based on the layout template of the edge display area, to implement the foregoing display method.

In another possible embodiment, location information of the main display area and the edge display area on the display is set in the electronic device by the user. In other words, the user of the electronic device may increase a size of the edge display area according to a user requirement, so that more function controls can be deployed. The user of the electronic device may adjust the edge display area by using a drag operation, or may adjust the size of the edge display area by using a setting menu provided by an application. When a system application or a third-party application is started, a size of a display area that is set by the user may be obtained through an external display interface, and then a layout may be adjusted based on the size and the layout template of the edge display area, to implement the foregoing display method.

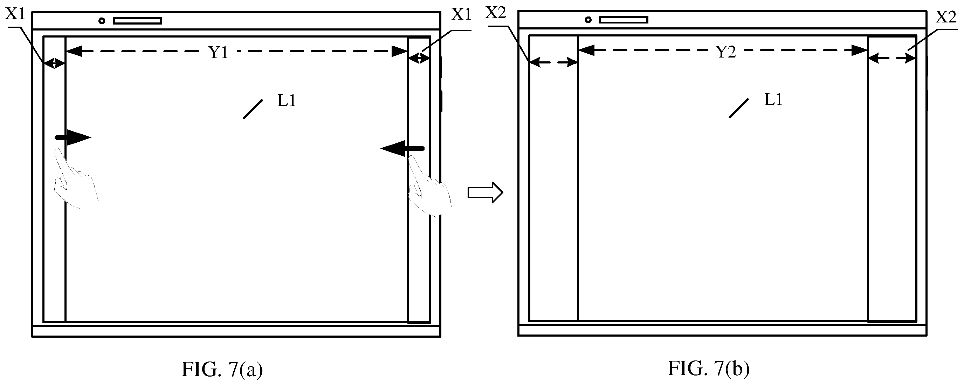

For example, as shown in FIG. 7(a), a width of the edge display area is X1, and a width of the main display area is Y1. When the electronic device detects a drag operation performed by the user on the edge display area, the electronic device displays an interface shown in FIG. 7(b). A width of the edge display area is X2, and a width of the main display area is Y2. X2 is greater than X1, and Y1 is less than Y2.

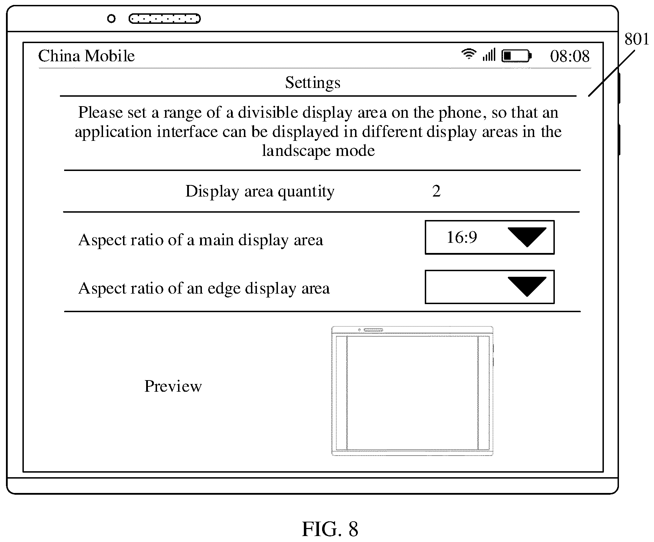

For example, as shown in FIG. 8, a setting control of a display area is displayed in a setting interface 801 of a game application, and the user may independently set an aspect ratio (that is, a height-width ratio) of the main display area and an aspect ratio of the edge display area. Alternatively, the user may select an aspect ratio of the main display area and an aspect ratio of the edge display area in the setting interface 81.

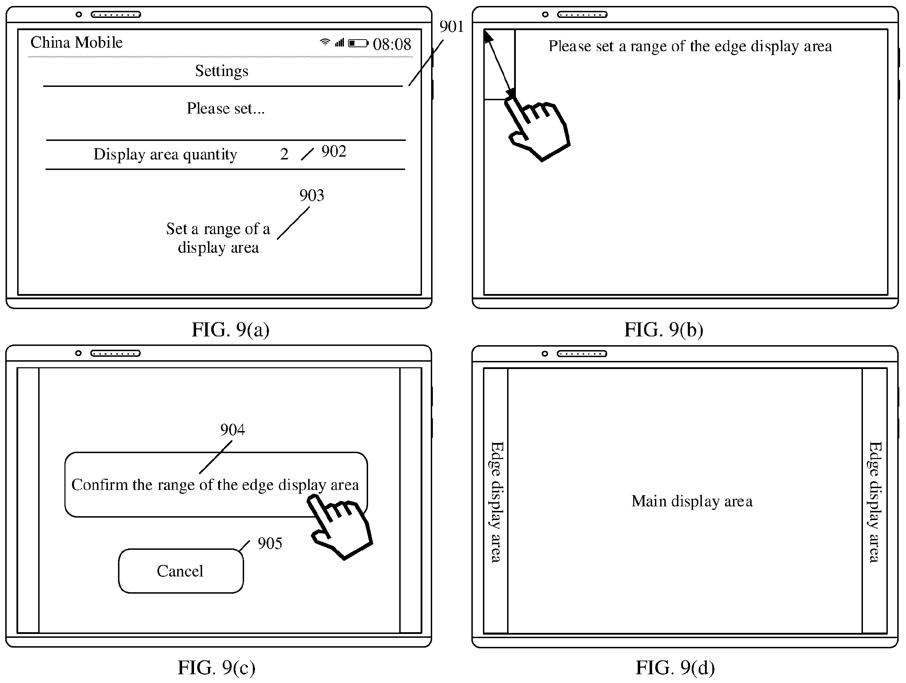

For another example, as shown in FIG. 9(a), a display area quantity setting control 902 and a display area range setting control 903 in the landscape mode are displayed in a setting interface 901 of the mobile phone. After the user sets a quantity of display areas to 2, and taps the control 903, as shown in FIG. 9(b), the mobile phone may prompt the user to set a range of the main display area, and the user may drag on the display to set the range of the secondary display area. After the user stops dragging, as shown in FIG. 9(c), the mobile phone may display a control 904 for confirming the range of the main display area and a control 905 for canceling setting. After the user taps the control 904, as shown in FIG. 9(d), the mobile phone may determine ranges of the main display area and the edge display area that are set by the user.

Certainly, other than the foregoing described setting manners, the user may alternatively set a display area of the display of the mobile phone in another manner. This is not limited in the embodiments of this application.

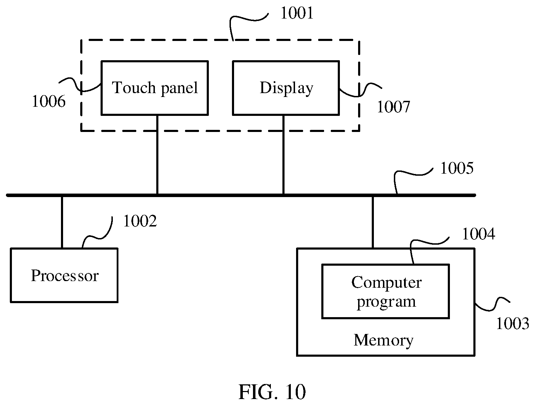

In some other embodiments of this application, an electronic device is further disclosed. As shown in FIG. 10, the electronic device may include: a touchscreen 1001, where the touchscreen 1001 includes a touch panel 1006 and a display 1007; one or more processors 1002; a memory 1003; one or more applications (not shown); and one or more computer programs 1004. The foregoing components may be connected by using one or more communications buses 1005. The one or more computer programs 1004 are stored in the memory 1003 and are configured to be executed by the one or more processors 1002. The one or more computer programs 1004 include instructions, and the instructions may be used to perform the steps in the corresponding embodiment in FIG. 5A.

An embodiment of this application further provides a computer storage medium. The computer storage medium stores computer instructions. When the computer instructions are run on an electronic device, the electronic device is enabled to perform the foregoing related method steps, to implement the display method in the foregoing embodiments.

An embodiment of this application further provides a computer program product. When the computer program product runs on a computer, the computer is enabled to perform the foregoing related steps, to implement the display method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the display method on a touchscreen in the foregoing method embodiments.

The electronic device, the computer storage medium, the computer program product, or the chip provided in the embodiments of this application may be configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division into the foregoing function modules is taken as an example for illustration. During actual application, the foregoing functions can be allocated to different function modules for implementation according to a requirement, that is, an inner structure of an apparatus is divided into different function modules to implement all or some of the functions described above.

In the several embodiments provided in this application, it should be understood that the disclosed apparatus and method may be implemented in another manner. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, in other words, may be located at one place, or may be distributed in a plurality of different places. Some or all of the units may be selected according to actual requirements to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes any medium that can store program code, for example, a USB flash drive, a removable hard disk, a read-only memory (read only memory, ROM), a random access memory (random access memory, RAM), a magnetic disk, or an optical disc.

## Claims

1. A display method, applied to an electronic device, wherein a display of the electronic device comprises a main display area and an edge display area, and the method comprises:
determining (501) that the display is in a landscape mode; and
controlling (502) the main display area and the edge display area of the display to display a display interface of a first application, wherein at least one function control is displayed in the edge display area, and the at least one function control is related to the first application,
**characterized in that**
before the controlling the main display area and the edge display area of the display to display a display interface of a first application, the method further comprises:
obtaining, when the first application is being started, a size and a layout template of the edge display area, wherein the layout template comprises a display style, a layout parameter, and a control response manner; and
adjusting a layout of the at least one function control in the edge display area based on the size and the layout template.

2. The method according to claim 1, further comprising:
hiding the at least one function control when determining that no touch operation performed by a user on the at least one function control is received within specified duration.

3. The method according to claim 1 or claim 2, wherein
location information of the main display area and the edge display area on the display is preconfigured in the electronic device; or
location information of the main display area and the edge display area on the display is set in the electronic device by the user.

4. The method according to any one of claims 1 to 3, wherein
the display of the electronic device is a foldable display and the display is in a folded state, the main display area is a lighted first screen and/or a lighted second screen, and the edge display area is a bendable area, wherein the foldable display can be folded to form at least two screens, and the at least two screens comprise the first screen and the second screen;
the display of the electronic device is a curved display, the main display area is a non-curved part on a front side of the display, and the edge display area is a curved part on an edge of the display; or
the display of the electronic device is a bezel-less display, the main display area is a front part of the display, and the edge display area is a side part of the display.

5. An electronic device, comprising a display (1007), a processor (1002), and a memory (1003), wherein the display (1007) comprises a main display area and an edge display area;
the memory (1003) is configured to store one or more computer programs; and
when the one or more computer programs (1004) stored in the memory (1003) are executed by the processor (1002), the electronic device is enabled to perform the following steps:
determining that the display (1007) is in a landscape mode; and
controlling the main display area and the edge display area of the display to display a display interface of a first application, wherein at least one function control is displayed in the edge display area, and the at least one function control is related to the first application,
**characterized in that**
when the one or more computer programs stored in the memory are executed by the processor, before controlling the main display area and the edge display area of the display to display the display interface of the first application, the electronic device is enabled to specifically perform the following steps:
obtaining (501), when the first application is being started, a size and a layout template of the edge display area, wherein the layout template comprises a display style, a layout parameter, and a control response manner; and
adjusting (502) a layout of the at least one function control in the edge display area based on the size and the layout template.

6. The electronic device according to claim 5, wherein when the one or more computer programs stored in the memory are executed by the processor, the electronic device is enabled to further perform the following step:
hiding the at least one function control when determining that no touch operation performed by a user on the at least one function control is received within specified duration.

7. The electronic device according to claim 5 or claim 6, wherein location information of the main display area and the edge display area on the display is preconfigured in the electronic device; or
location information of the main display area and the edge display area on the display is set in the electronic device by the user.

8. The electronic device according to any one of claims 5 to 7, wherein
the display of the electronic device is a foldable display and the display is in a folded state, the main display area is a lighted first screen and/or a lighted second screen, and the edge display area is a bendable area, wherein the foldable display can be folded to form at least two screens, and the at least two screens comprise the first screen and the second screen;
the display of the electronic device is a curved display, the main display area is a non-curved part on a front side of the display, and the edge display area is a curved part on an edge of the display; or
the display of the electronic device is a bezel-less display, the main display area is a front part of the display, and the edge display area is a side part of the display.

9. A computer-readable storage medium, wherein the computer-readable storage medium comprises program instructions, and when the program instructions are run on an electronic device, the electronic device is enabled to perform the method according to any one of claims 1 to 4.

10. A program product, wherein when the program product runs on an electronic device, the electronic device is enabled to perform the method according to any one of claims 1 to 4.

## Patentansprüche

1. Anzeigeverfahren, das auf eine elektronische Vorrichtung angewendet wird, wobei eine Anzeige der elektronischen Vorrichtung einen Hauptanzeigebereich und einen Randanzeigebereich umfasst und das Verfahren Folgendes umfasst:
Bestimmen (501), dass sich die Anzeige in einem Querformat-Modus befindet; und
Steuern (502) des Hauptanzeigebereichs und des Randanzeigebereichs der Anzeige zum Anzeigen einer Anzeigeoberfläche einer ersten Anwendung, wobei mindestens eine Funktionssteuerung in dem Randanzeigebereich angezeigt wird und die mindestens eine Funktionssteuerung mit der ersten Anwendung im Zusammenhang steht,
**dadurch gekennzeichnet, dass**
das Verfahren vor dem Steuern des Hauptanzeigebereichs und des Randanzeigebereichs der Anzeige zum Anzeigen einer Anzeigeoberfläche einer ersten Anwendung ferner Folgendes umfasst:
Erhalten, wenn die erste Anwendung gestartet wird, einer Größe und einer Layout-Vorlage des Randanzeigebereichs, wobei die Layout-Vorlage einen Anzeigestil, einen Layout-Parameter und eine Steuerantwortweise umfasst; und
Anpassen eines Layouts der mindestens einen Funktionssteuerung in dem Randanzeigebereich basierend auf der Größe und der Layout-Vorlage.

2. Verfahren nach Anspruch 1, das ferner Folgendes umfasst:
Verdecken der mindestens einen Funktionssteuerung, wenn bestimmt wird, dass innerhalb einer vorgegebenen Dauer kein durch einen Benutzer auf der mindestens einen Funktionssteuerung durchgeführter Berührungsbedienvorgang empfangen wird.

3. Verfahren nach Anspruch 1 oder Anspruch 2, wobei
Positionsinformationen des Hauptanzeigebereichs und des Randanzeigebereichs auf der Anzeige in der elektronischen Vorrichtung vorkonfiguriert sind; oder Positionsinformationen des Hauptanzeigebereichs und des Randanzeigebereichs auf der Anzeige in der elektronischen Vorrichtung durch den Benutzer eingestellt werden.

4. Verfahren nach einem der Ansprüche 1 bis 3, wobei
die Anzeige der elektronischen Vorrichtung eine faltbare Anzeige ist und sich die Anzeige in einem gefalteten Zustand befindet, der Hauptanzeigebereich ein beleuchteter erster Bildschirm und/oder ein beleuchteter zweiter Bildschirm ist und der Randanzeigebereich ein biegbarer Bereich ist, wobei die faltbare Anzeige so gefaltet werden kann, dass mindestens zwei Bildschirme gebildet werden, und die mindestens zwei Bildschirme den ersten Bildschirm und den zweiten Bildschirm umfassen;
die Anzeige der elektronischen Vorrichtung eine gekrümmte Anzeige ist, der Hauptanzeigebereich ein nicht gekrümmter Teil einer Vorderseite der Anzeige ist und der Randanzeigebereich ein gekrümmter Teil an einem Rand der Anzeige ist; oder die Anzeige der elektronischen Vorrichtung eine rahmenlose Anzeige ist, der Hauptanzeigebereich ein vorderer Teil der Anzeige ist und der Randanzeigebereich ein Seitenteil der Anzeige ist.

5. Elektronische Vorrichtung, die eine Anzeige (1007), einen Prozessor (1002) und einen Speicher (1003) umfasst, wobei die Anzeige (1007) einen Hauptanzeigebereich und einen Randanzeigebereich umfasst;
der Speicher (1003) dazu ausgelegt ist, ein oder mehrere Computerprogramme zu speichern; und
eine Ausführung des einen oder der mehreren in dem Speicher (1003) gespeicherten Computerprogramme (1004) durch den Prozessor (1002) ermöglicht, dass die elektronische Vorrichtung die folgenden Schritte durchführt:
Bestimmen, dass sich die Anzeige (1007) in einem Querformat-Modus befindet; und Steuern des Hauptanzeigebereichs und des Randanzeigebereichs der Anzeige zum Anzeigen einer Anzeigeoberfläche einer ersten Anwendung, wobei mindestens eine Funktionssteuerung in dem Randanzeigebereich angezeigt wird und die mindestens eine Funktionssteuerung mit der ersten Anwendung im Zusammenhang steht,
**dadurch gekennzeichnet, dass**
eine Ausführung des einen oder der mehreren in dem Speicher gespeicherten Computerprogramme durch den Prozessor, vor dem Steuern des Hauptanzeigebereichs und des Randanzeigebereichs der Anzeige zum Anzeigen der Anzeigeoberfläche der ersten Anwendung, ermöglicht, dass die elektronische Vorrichtung insbesondere die folgenden Schritte durchführt:
Erhalten (501), wenn die erste Anwendung gestartet wird, einer Größe und einer Layout-Vorlage des Randanzeigebereichs, wobei die Layout-Vorlage einen Anzeigestil, einen Layout-Parameter und eine Steuerantwortweise umfasst; und
Anpassen (502) eines Layouts der mindestens einen Funktionssteuerung in dem Randanzeigebereich basierend auf der Größe und der Layout-Vorlage.

6. Elektronische Vorrichtung nach Anspruch 5, wobei eine Ausführung des einen oder der mehreren in dem Speicher gespeicherten Computerprogramme durch den Prozessor ermöglicht, dass die elektronische Vorrichtung ferner den folgenden Schritt durchführt:
Verdecken der mindestens einen Funktionssteuerung, wenn bestimmt wird, dass innerhalb einer vorgegebenen Dauer kein durch einen Benutzer auf der mindestens einen Funktionssteuerung durchgeführter Berührungsbedienvorgang empfangen wird.

7. Elektronische Vorrichtung nach Anspruch 5 oder Anspruch 6, wobei Positionsinformationen des Hauptanzeigebereichs und des Randanzeigebereichs auf der Anzeige in der elektronischen Vorrichtung vorkonfiguriert sind; oder
Positionsinformationen des Hauptanzeigebereichs und des Randanzeigebereichs auf der Anzeige in der elektronischen Vorrichtung durch den Benutzer eingestellt werden.

8. Elektronische Vorrichtung nach einem der Ansprüche 5 bis 7, wobei
die Anzeige der elektronischen Vorrichtung eine faltbare Anzeige ist und sich die Anzeige in einem gefalteten Zustand befindet, der Hauptanzeigebereich ein beleuchteter erster Bildschirm und/oder ein beleuchteter zweiter Bildschirm ist und der Randanzeigebereich ein biegbarer Bereich ist, wobei die faltbare Anzeige so gefaltet werden kann, dass mindestens zwei Bildschirme gebildet werden, und die mindestens zwei Bildschirme den ersten Bildschirm und den zweiten Bildschirm umfassen;
die Anzeige der elektronischen Vorrichtung eine gekrümmte Anzeige ist, der Hauptanzeigebereich ein nicht gekrümmter Teil einer Vorderseite der Anzeige ist und der Randanzeigebereich ein gekrümmter Teil an einem Rand der Anzeige ist; oder die Anzeige der elektronischen Vorrichtung eine rahmenlose Anzeige ist, der Hauptanzeigebereich ein vorderer Teil der Anzeige ist und der Randanzeigebereich ein Seitenteil der Anzeige ist.

9. Computerlesbares Speichermedium, wobei das computerlesbare Speichermedium Programmanweisungen umfasst und eine Ausführung der Programmanweisungen auf einer elektronischen Vorrichtung ermöglicht, dass die elektronische Vorrichtung das Verfahren nach einem der Ansprüche 1 bis 4 durchführt.

10. Programmprodukt, wobei eine Ausführung des Programmprodukts auf einer elektronischen Vorrichtung ermöglicht, dass die elektronische Vorrichtung das Verfahren nach einem der Ansprüche 1 bis 4 durchführt.

## Revendications

1. Procédé d'affichage, appliqué à un dispositif électronique, dans lequel un dispositif d'affichage du dispositif électronique comprend une zone d'affichage principale et une zone d'affichage de bordure, et le procédé comprend les étapes consistant à :
déterminer (501) que le dispositif d'affichage est dans un mode paysage ; et
commander (502) la zone d'affichage principale et la zone d'affichage de bordure du dispositif d'affichage pour leur faire afficher une interface d'affichage d'une première application, au moins une commande de fonction étant affichée dans la zone d'affichage de bordure, et l'au moins une commande de fonction étant liée à la première application,
**caractérisé en ce que**
avant la commande de la zone d'affichage principale et de la zone d'affichage de bordure du dispositif d'affichage pour leur faire afficher une interface d'affichage d'une première application, le procédé comprend également les étapes consistant à :
obtenir, lorsque la première application est lancée, une taille et un modèle de disposition de la zone d'affichage de bordure, le modèle de disposition comprenant un style d'affichage, un paramètre de disposition et un mode de réponse aux commandes ; et
régler une disposition de l'au moins une commande de fonction dans la zone d'affichage de bordure sur la base de la taille et du modèle de disposition.

2. Procédé selon la revendication 1, comprenant également l'étape consistant à :
cacher l'au moins une commande de fonction lorsqu'il est déterminé qu'aucune opération tactile effectuée par un utilisateur sur l'au moins une commande de fonction n'est reçue au cours d'une durée spécifiée.

3. Procédé selon la revendication 1 ou la revendication 2, dans lequel
une information d'emplacement de la zone d'affichage principale et de la zone d'affichage de bordure sur le dispositif d'affichage est préconfigurée dans le dispositif électronique ; ou
une information d'emplacement de la zone d'affichage principale et de la zone d'affichage de bordure sur le dispositif d'affichage est définie dans le dispositif électronique par l'utilisateur.

4. Procédé selon l'une quelconque des revendications 1 à 3, dans lequel
le dispositif d'affichage du dispositif électronique est un dispositif d'affichage pliant et le dispositif d'affichage est dans un état plié, la zone d'affichage principale est un premier écran éclairé et/ou un deuxième écran éclairé, et la zone d'affichage de bordure est une zone flexible, le dispositif d'affichage pliant pouvant être plié pour former au moins deux écrans, et les au moins deux écrans comprenant le premier écran et le deuxième écran ;
le dispositif d'affichage du dispositif électronique est un dispositif d'affichage courbe, la zone d'affichage principale est une partie non courbe d'un côté avant du dispositif d'affichage, et la zone d'affichage de bordure est une partie courbe située sur un bord du dispositif d'affichage ; ou
le dispositif d'affichage du dispositif électronique est un dispositif d'affichage sans cadre, la zone d'affichage principale est une partie avant du dispositif d'affichage, et la zone d'affichage de bordure est une partie latérale du dispositif d'affichage.

5. Dispositif électronique, comprenant un dispositif d'affichage (1007), un processeur (1002) et une mémoire (1003), dans lequel le dispositif d'affichage (1007) comprend une zone d'affichage principale et une zone d'affichage de bordure ;
la mémoire (1003) est configurée pour stocker un ou plusieurs programmes informatiques ; et
lorsque les un ou plusieurs programmes informatiques (1004) stockés dans la mémoire (1003) sont exécutés par le processeur (1002), le dispositif électronique est activé pour effectuer les étapes suivantes :
déterminer que le dispositif d'affichage (1007) est dans un mode paysage ; et
commander la zone d'affichage principale et la zone d'affichage de bordure du dispositif d'affichage pour leur faire afficher une interface d'affichage d'une première application, au moins une commande de fonction étant affichée dans la zone d'affichage de bordure, et l'au moins une commande de fonction étant liée à la première application,
**caractérisé en ce que**
lorsque les un ou plusieurs programmes informatiques stockés dans la mémoire sont exécutés par le processeur, avant la commande de la zone d'affichage principale et de la zone d'affichage de bordure du dispositif d'affichage pour leur faire afficher l'interface d'affichage de la première application, le dispositif électronique est activé pour effectuer spécifiquement les étapes suivantes :
obtenir (501), lorsque la première application est lancée, une taille et un modèle de disposition de la zone d'affichage de bordure, le modèle de disposition comprenant un style d'affichage, un paramètre de disposition et un mode de réponse aux commandes ; et
régler (502) une disposition de l'au moins une commande de fonction dans la zone d'affichage de bordure sur la base de la taille et du modèle de disposition.

6. Dispositif électronique selon la revendication 5, dans lequel l'exécution, par le processeur, du ou des programmes informatiques stockés dans la mémoire permet au dispositif électronique d'effectuer également l'étape suivante :
cacher l'au moins une commande de fonction lorsqu'il est déterminé qu'aucune opération tactile effectuée par un utilisateur sur l'au moins une commande de fonction n'est reçue au cours d'une durée spécifiée.

7. Dispositif électronique selon la revendication 5 ou la revendication 6, dans lequel une information d'emplacement de la zone d'affichage principale et de la zone d'affichage de bordure sur le dispositif d'affichage est préconfigurée dans le dispositif électronique ; ou
une information d'emplacement de la zone d'affichage principale et de la zone d'affichage de bordure sur le dispositif d'affichage est définie dans le dispositif électronique par l'utilisateur.

8. Dispositif électronique selon l'une quelconque des revendications 5 à 7, dans lequel
le dispositif d'affichage du dispositif électronique est un dispositif d'affichage pliant et le dispositif d'affichage est dans un état plié, la zone d'affichage principale est un premier écran éclairé et/ou un deuxième écran éclairé, et la zone d'affichage de bordure est une zone flexible, le dispositif d'affichage pliant pouvant être plié pour former au moins deux écrans, et les au moins deux écrans comprenant le premier écran et le deuxième écran ;
le dispositif d'affichage du dispositif électronique est un dispositif d'affichage courbe, la zone d'affichage principale est une partie non courbe d'un côté avant du dispositif d'affichage, et la zone d'affichage de bordure est une partie courbe située sur un bord du dispositif d'affichage ; ou
le dispositif d'affichage du dispositif électronique est un dispositif d'affichage sans cadre, la zone d'affichage principale est une partie avant du dispositif d'affichage, et la zone d'affichage de bordure est une partie latérale du dispositif d'affichage.

9. Support de stockage lisible par ordinateur, dans lequel le support de stockage lisible par ordinateur comprend des instructions de programme, et l'exécution des instructions de programme sur un dispositif électronique permet au dispositif électronique de réaliser le procédé selon l'une quelconque des revendications 1 à 4.

10. Produit-programme, dans lequel lorsque le produit-programme s'exécute sur un dispositif électronique, le dispositif électronique est activé pour réaliser le procédé selon l'une quelconque des revendications 1 à 4.
